# EUROPEAN PATENT APPLICATION

(11) **EP 1 484 848 A2**
(43) Date of publication of application: **08.12.2004**
(21) Application number: 03025351.2
(22) Date of filing: 04.11.2003
(51) Int. Cl.: H04B 7/185

(54) **Satellite communication testing method and system**

(30) Priority: 03.06.2003 US 452148
(71) Applicant: Northrop Grumman Corporation, Redondo Beach, California, 90278 (US)
(72) Inventor: Munoz, Michael Steven, Redondo Beach, CA 90278 (US); Harmon, Garrick Jon, Newport Beach, CA 92661 (US)
(74) Representative: Rösler, Uwe, Dipl.-Phys.

(57) **Abstract**

A frequency channel is assigned to each of a plurality of locations. A beam within the assigned channel and having a specified beam width is directed between a satellite and each location, and data is transmitted. A spread spectrum test signal is transmitted to the satellite, received, and processed, and a return test signal is transmitted from the satellite, and processed to determine the quality of operation of the antenna and associated electronics. A radio frequency signal having a first polarization is transmitted to the satellite, received, and processed to provide a first processed signal. The quality of the first processed signal is determined. If the quality is acceptable, the first processed signal is utilized. If the quality is not acceptable, the signal source is notified, and the radio frequency signal is retransmitted with a second polarization, received, processed, and utilized.

## Description

### FIELD OF THE INVENTION

The present invention pertains radio frequency communications, and particularly to satellite communications. More particularly, the present invention pertains to a method of and a system for on-orbit testing of a multi-beam satellite antenna, to a method of transmitting and receiving data from an orbiting communication satellite, and to a method of and system for receiving radio frequency signals on a communication satellite.

### BACKGROUND OF THE INVENTION

Present on-orbit satellite communication testing involves sending a test signal to each individual beam of a multi-beam satellite antenna. The test signal is returned, and the return gain-to-noise temperature (G/T) ratio and bandwidth are compared to those of the original test signal to verify the satellite functionality. However, this testing method requires that sending of other radio frequency signals to or from the satellite be stopped while the test is conducted, with the resultant loss in data traffic time.

In addition, there is a need to maximize the frequency spectrum of communication satellites. Present communication satellites maximize available antenna frequency spectrum by mapping the geographic area to which the satellite is transmitting, using uniform small spot beam sizes. Adjacent spot beams can share or reuse a frequency plan that is underutilized; however, such spot beam reuse creates problems in geographic areas that are densely populated, with a large number of instantaneous users. This is particularly true during business hours or just after business hours, when use is high. During such times, it can be difficult to obtain the required frequency bandwidth.

There is also a need to minimize the loss of the radio frequency receiver functionality in a communication satellite when one or more of its low noise amplifiers (LNAs) become unoperational. An unoperational LNA can result in loss of all the data from an entire radio frequency channel. Present satellite receivers are often provided with redundant LNAs. However, this redundancy utilizes radio frequency switches to switch between the LNAs. Such a switch has a finite component loss. Typically, the radio frequency switch loss, while dependent upon the radio frequency channel frequency range, might be from a few tenths of a dB to one dB. This loss directly affects the G/T performance of the satellite, even when the LNA and the channel are functioning properly, because the loss in the radio frequency switch before the LNA directly adds to the overall system noise figure.

### SUMMARY OF THE INVENTION

The present invention is a method of and a system for communicating with a communication satellite which overcome these problems. The present invention includes a method of and system for on-orbit testing of a multi-beam satellite antenna, and the associated electronics, used for transmitting and receiving data. The method includes transmitting a spread spectrum test signal from a signal source to the satellite, receiving the spread spectrum test signal with the antenna on the satellite, processing the spread spectrum test signal at the satellite, transmitting a return test signal from the satellite, receiving the return test signal at a signal receiver, and processing the received test signal to determine the quality of the operation of the antenna and the associated electronics. The spread spectrum test signal and the return test signal can be transmitted while the antenna is sending or receiving another signal. Thus, there is no loss in data traffic time. By way of example, the spread spectrum test signal can be processed on the satellite by despreading it to obtain a narrow band signal. The received return test signal might be processed by comparing it with a standard. The received return test signal might also be processed by extracting the return test signal bandwidth and comparing its bandwidth with the bandwidth of the spread spectrum test signal.

The system for on-orbit testing of a multi-beam satellite antenna includes a satellite having an antenna, a test signal source for transmitting a spread spectrum test signal to the satellite, a first signal receiver within the satellite and coupled to the satellite antenna for receiving the spread spectrum test signal, a first signal processor within the satellite for processing the received spread spectrum test signal, a transmitter within the satellite and responsive to the processed test signal for transmitting a return test signal from the satellite, a second signal receiver for receiving the return test signal, and a second signal processor for comparing the received return test signal with a standard to determine the quality of the antenna operation.

This method and system are not restricted to use with satellite communication, but are also applicable to communication between other locations.

Further, the present invention is a method of communicating between an orbiting communication satellite having a beamforming antenna with a known available frequency spectrum and a plurality of locations distributed over a geographic area of the earth. The method includes assigning to each location a frequency channel from the available frequency spectrum, with adjacent locations being assigned different frequency channels, directing a beam between the beamforming antenna and each location, the beam for each location being within the frequency channel assigned to the respective location and having a specified beam width, and transmitting data on the assigned frequency channels. The beamforming antenna might be a phased array antenna having a plurality of elements, and the frequency channels can be assigned by selecting an amplitude value and a phase shift for each antenna element. The frequency channels can be reassigned from time to time as needs of the locations change. The data might be transmitted from the satellite to the ground station or from the ground station to the satellite.

Still further, the present invention is a method of and system for receiving radio frequency signals on a satellite. The method includes transmitting a radio frequency signal having a first polarization from a signal source to the satellite, receiving the radio frequency signal at the satellite, processing the received radio frequency signal to provide a first processed signal, and determining whether the quality of the first processed signal is acceptable. If the quality of the first processed signal is acceptable, then the first processed signal is utilized. However, if the quality of the first processed signal is not acceptable, the signal source is notified, and the radio frequency signal is retransmitted from the signal source with a second polarization. The retransmitted radio frequency signal is received at the satellite and processed to provide a second processed signal, and the second processed signal is utilized. The first polarization might be either horizontal polarization or vertical polarization, and correspondingly the second polarization is either vertical polarization or horizontal polarization.

The system includes a signal source for transmitting a radio frequency signals with a predetermined polarization, a signal polarization detector, such as an orthogonal mode transducer, on the satellite for determining the polarization of the received radio frequency signals, first and second amplifiers for amplifying received radio frequency signals having a first polarization and a second polarization, respectively, a signal processor for determining the quality of the amplified radio frequency signals, a utilizing circuit for utilizing amplified radio frequency signals determined to be of at least a first level of quality, and a transmitter responsive to amplified radio frequency signals determined to be of less than the first level of quality, for transmitting a message to the signal source to cause the signal source to retransmit the radio frequency signal with the second polarization.

### BRIEF DESCRIPTION OF THE DRAWINGS

These and other aspects and advantages of the present invention are more apparent from the following detailed description and claims, particularly when considered in conjunction with the accompanying drawings in which like parts bear like reference numerals. In the drawings:

Figure 1 is a diagram depicting communication between an orbiting satellite and an antenna at a ground station on the surface of the earth;

Figure 2 is a block diagram of a system for on-orbit testing of a multi-beam satellite antenna in accordance with an aspect of the present invention;

Figures 3 and 4 are flowcharts of methods of on-orbit testing of a multi-beam satellite antenna utilizing the system of Figure 2;

Figure 5 is a diagram illustrating communication between an orbiting communication satellite and a plurality of locations on the surface of the earth in accordance with another aspect of the present invention;

Figure 6 is a flowchart of a first embodiment of a method of communicating between an orbiting communication satellite and a plurality of locations in the manner illustrated in Figure 5;

Figure 7 is a flowchart of a second embodiment of a method of communicating between an orbiting communication satellite and a plurality of locations in the manner illustrated in Figure 5;

Figure 8 is a block diagram of a system for communicating with a satellite in accordance with a further aspect of the present invention; and

Figure 9 is a flowchart of an embodiment of a method of communicating with a satellite utilizing the system of Figure 8.

### DETAILED DESCRIPTION OF PREFERRED EMBODIMENTS

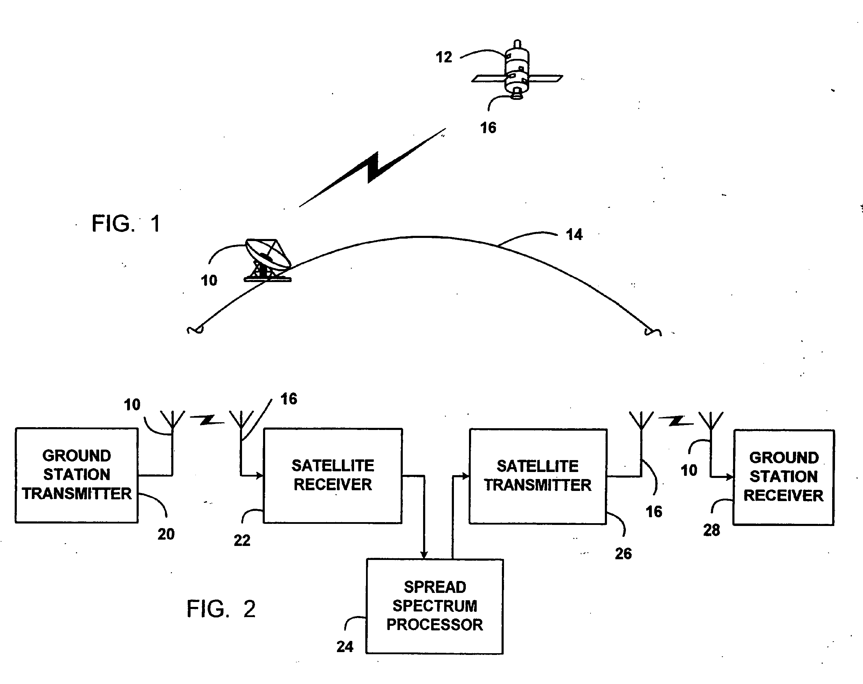

Figure 1 depicts an antenna 10 at a ground station on the surface of the earth 14 communicating with an orbiting communication satellite 12. Satellite 12 has an antenna 16 to receive radio frequency signals from antenna 10 and to transmit radio frequency signals to locations on the surface of the earth 14, including antenna 10. Antenna 16, of course, may be an array of antennas or of antenna elements.

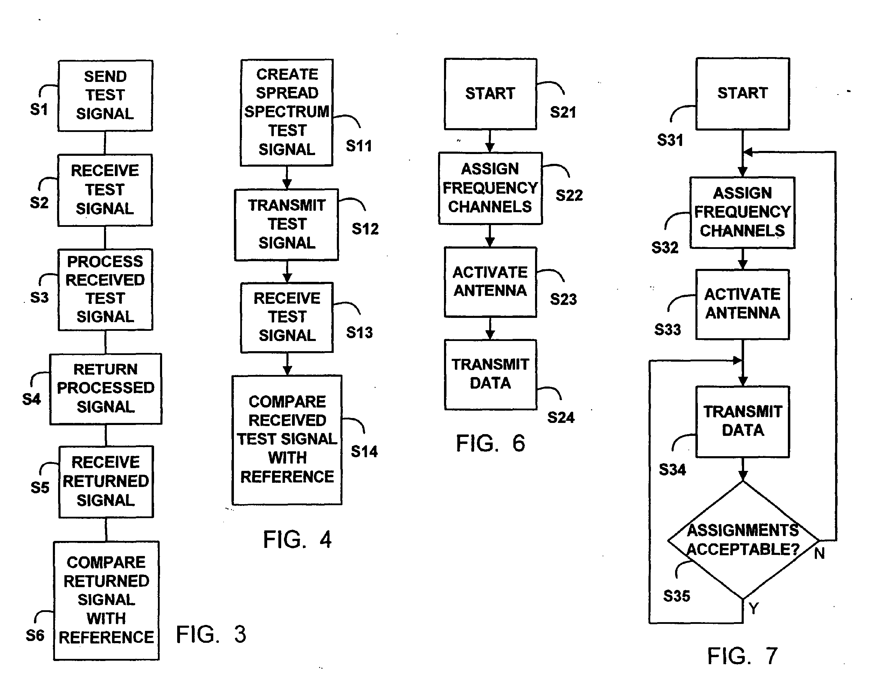

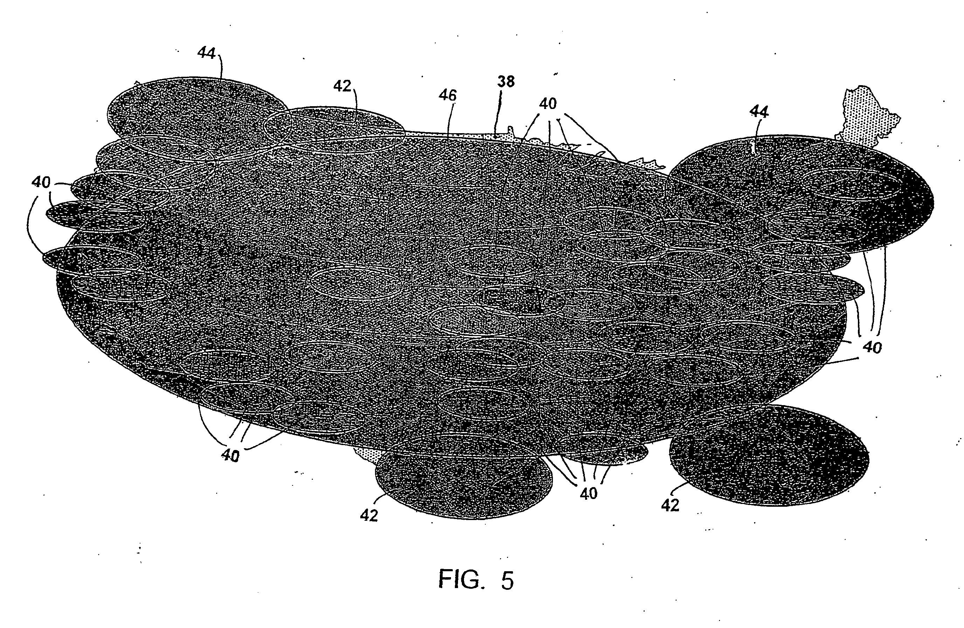

Figure 2 illustrates a system for on-orbit testing of a multi-beam satellite antenna, such as antenna 16, and the associated electronics. Figure 3 is a flowchart of a method of such testing involving receiving of a signal by the satellite. In a first step S1, ground station transmitter 20 sends a test signal by means of antenna 10 to receiver 22 within satellite 12. The test signal can be sent in step S1 while other data is being transmitted to or from satellite 12. In a second step S2, that test signal is received by satellite receiver 22 via antenna 16. Satellite receiver 22 applies the test signal to spread spectrum processor 24 within satellite 12, and in step S3 spread spectrum processor 24 processes the received test signal. Spread spectrum processor 24 might process the received spread spectrum test signal by, for example, despreading the signal so as to obtain a narrow band signal. Processor 24 then applies a return processed signal to satellite transmitter 26, and in step S4 the return processed signal is transmitted to a signal receiver 28 at the ground station. In step S5, ground station receiver 28 receives the return signal via antenna 10, and in step S6 the received return test signal is processed to determine the quality of operation of antenna 16 and the associated electronics. This processing might comprise comparing the received return signal with a standard or might comprise extracting the received return test signal bandwidth and comparing the received return test signal bandwidth with the spread spectrum test signal bandwidth.

Figure 4 is a flowchart of a method of testing a multi-beam satellite antenna and the associated electronics involving transmitting of a signal by the satellite. In step S11 a spread spectrum test signal is created, and in step S12 transmitter 26 transmits that test signal by antenna 16. In step S13, the test signal is received by antenna 10 at ground station receiver 28. In step S14 the test signal is processed to determine the quality of operation of antenna 16 and the associated electronics. Again, this processing might comprise comparing the received test signal with a standard or comparing the received test signal bandwidth with a reference.

The system and methods of Figures 2-4 thus permit testing of antenna 16 and the associated electronics while other data is being transmitted to or from satellite 12, without having to shut down the usual communications. While the system and methods of Figures 2-4 have been described and depicted with reference to a communication satellite, the system and methods are applicable to other communication systems as well.

Figure 5 is a diagram illustrating a method of communicating between an orbiting communication satellite having a beamforming antenna with a known available frequency spectrum and a plurality of locations distributed over a geographic area 38 of the earth in accordance with another aspect of the present invention. Figure 5 illustrates a map of the United States and shows plurality of locations to which radio frequency beams of varying sizes are being transmitted from antenna 16 on satellite 12. Thus, for example, a number of beams 40 of comparatively small size are transmitted to a corresponding number of locations, while several beams 42 of a medium size are transmitted to larger geographic locations. The smaller size beams 40 might cover a metropolitan area and a surrounding suburban or exurban area. The medium size beams 42 might cover all or a significant portion of a state. Each of a number of medium large beams 44 might cover a region, such as the Pacific northwest or the New York- New England area. Additionally, a large beam 46 might cover substantially all of the geographic area 38 of the continental United States. Figure 5 only illustrates typical beam patterns. Numerous other beam patterns might be utilized in accordance with the present invention.

A frequency channel is assigned to each beam. Closely adjacent beams, arid particularly beams which overlap to any extent, are assigned different frequency channels so as to avoid interference of their signals. Accordingly, simultaneous communication of different messages can take place between satellite 12 and the several locations within geographic area 38. Thus, beamforming antenna 16 on orbiting satellite 12 divides the available communication satellite frequency spectrum into channels and produces a specific antenna beam width and location for each channel. The beam width and location are programmed, for example through selection of phased array element amplitude values and phase shifts when antenna 16 is a phased array antenna. Using a selective set of beams for each communication channel permits development of a non-uniform frequency plan based on needs. Frequency reuse is maximized because reuse is not limited to only the center-to-center spacing of adjacent spot beams. The maximum frequency bandwidth assignment can be based on the most needy locations by using higher frequency bandwidth channels for such locations. The beamforming phase array capacity can be recomputed from time to time, for example hourly or even on a minute-to-minute basis, to match the beam width to the required location frequency profile. As a result, efficient satellite bandwidth allocation is achieved.

Figure 6 is a flowchart of a method of communicating in the manner illustrated in Figure 5. The process starts in a step S21. In step S22 frequency channels are assigned to the various locations, and in step S23 the beamforming antenna is activated. In step S24 data is transmitted.

Figure 7 is a flowchart of an alternative method in which the beam width and location for the channels are reassigned as needed. This method starts in a step S31, and in step S32 the frequency channels are assigned. In step S33 the antenna is activated, and in step S34 data is transmitted. In step S35 it is determined whether the assignment of frequency channels is acceptable. If, for example, certain locations have greater needs, while other locations have lesser need, then the assignment is not acceptable and so the method returns to step S32, and the frequency channels are again assigned. If in step S35 the assignments are acceptable, the method continues with step S34 without making any reassignments.

The methods and system of Figures 5-7 are equally applicable to transmission of signals from a satellite 12 to a plurality of locations distributed over a geographic area on the surface of the earth and to reception by a satellite of signals transmitted from a plurality of locations distributed over a geographic area of the earth.

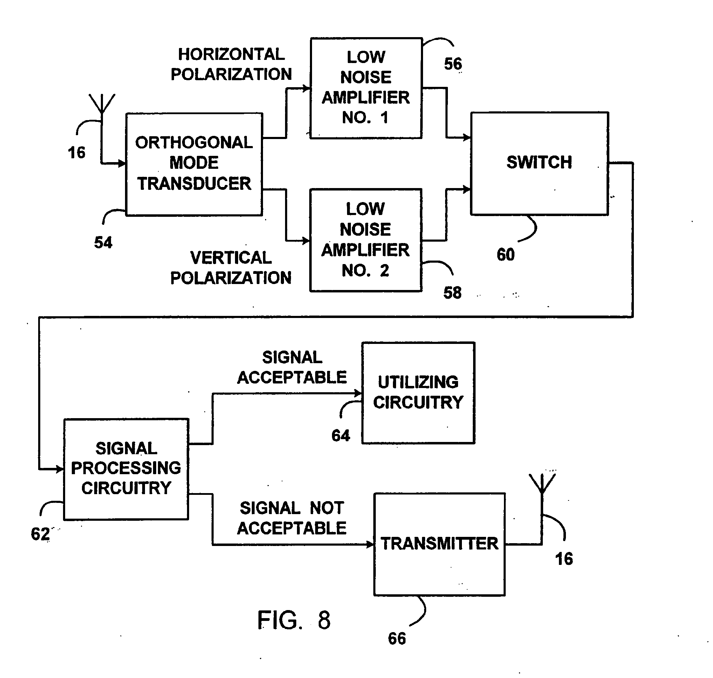

Figure 8 is a block diagram of a communication system within an orbiting satellite having redundant low noise amplifiers in accordance with a further aspect of the present invention. Antenna 16 receives both horizontally polarized signals and vertically polarized signals. The received signals are applied to orthogonal mode transducer 54 which applies horizontally polarized signals to a first low noise amplifier 56 and applies vertically polarized signals to a second low noise amplifier 58. The desired output from either low noise amplifier 56 or low noise amplifier 58 is selected by switch 60 which applies the amplified received signal to signal processing circuitry 62.

If the signal is acceptable, then it is applied from signal processing circuitry 62 to utilizing circuitry 64 within satellite 12. However, if the signal is not acceptable, then signal processing circuitry 62 causes transmitter 66 to transmit a signal via antenna 16 to the transmitting station. In response, the transmitting station rotates its antenna 90°, so as to change the polarization of the signal, and retransmits the signal. Thus, if the original signal was horizontally polarized and so passed through first low noise amplifier 56, but that amplifier was not operating acceptably, then the retransmitted signal would be vertically polarized so as to pass through second low noise amplifier 58. Accordingly, the signal is still able to be utilized, even though one low noise amplifier is not operating acceptably.

Because orthogonal mode transducer 54 has substantially no attenuation, the signal to noise temperature ratio is not adversely affected, as it would be if a radio frequency switch were used to select between the two low noise amplifiers. Since switch 60 is after the low noise amplifiers, any attenuation introduced by it is not amplified.

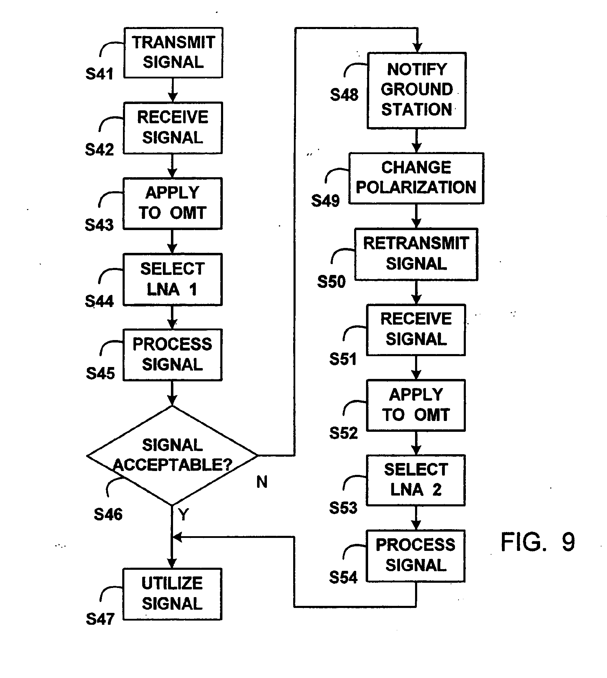

Figure 9 is a flow chart of a method of communicating with an orbiting satellite utilizing the system of Figure 8. In stepS41, a radio frequency signal is transmitted from antenna 10 at the ground station to antenna 16 on satellite 12. In stepS42, the signal is received at antenna 16. In stepS43, the signal is applied to orthogonal mode transducer 54 which determines the polarization of the signal. In stepS44, orthogonal mode transducer 54 selects the low noise amplifier 56 or 58 corresponding to the polarization of the signal. The amplified signal passes through switch 60 to signal processing circuitry 62. Circuitry 62 processes the signal in stepS45. The type of processing performed depends upon the nature of the signal. In step S46 it is determined whether the signal is acceptable. If the signal is acceptable, then in step S47 the signal is utilized within utilizing circuitry 64, the nature of which is also dependent upon the nature of the signal. For example, if the signal is a command for satellite 12 to perform some operation, such as changing its orientation, then utilizing circuitry 64 is the circuitry to cause that operation; whereas, if the signal is a command for satellite 12 to send certain data to the ground station, then utilizing circuitry 64 is the circuitry for retrieving that data and transmitting it via antenna 16.

If the signal is not acceptable in step S46, then in step S48 transmitter 66 is activated to send a signal to notify the ground station of that. Then, in step S49 antenna 10 is rotated 90° to change the polarization of the signal, and the signal is retransmitted in stepS50. In step S51 the retransmitted signal is received by receiving circuitry 52, and in step S52 the signal is applied to orthogonal mode transducer 54. Since the polarity of the retransmitted signal is the opposite of that of the originally transmitted signal of stepS41, the other low noise amplifier 56 or 58 is selected in stepS53. The amplified signal passes through switch 60 to signal processing circuitry 62. The signal is then, processed in stepS54 and utilized in stepS47. Thus, even if one low noise amplifier 56 or 58 is not operational, the signal can still be utilized by satellite 12; yet no significant loss is introduced, as would be the case if a radio frequency switch were utilized before the low noise amplifiers.

The determination in step S46 of whether the signal is acceptable may be simply a determination of whether the signal is present or absent. For example, if no signal is received for processing by signal processing circuitry 62 for a predetermined period of time, then the processing circuitry can activate transmitter 66 to send a signal to the signal source to initiate rotation of antenna 10 and retransmission of the signal. Alternatively, a low signal quality, such as loss of digital bits, may cause the signal to be found to be unacceptable. Signal processing circuitry 62 can include a demodulator and other circuitry to process the received signals for application to utilizing circuitry 64, as well as circuitry to sense the absence of a signal for a preselected time so as to activate transmitter 66.

While the system and method of Figures 8 and 9 have been described and depicted with reference to a communication satellite, the system and method are applicable to other communication systems as well.

The present invention thus provides an improved method of and system for communicating, particularly suitable for communicating with a communication satellite, including an improved method of and system for on-orbit testing of a multi-beam antenna on the satellite, an improved method of communicating between the satellite and a plurality of locations distributed over a geographic area of the earth, and an improved method of and system for receiving radio frequency signals. Although the present invention has been described with reference to preferred embodiments, various rearrangements, alterations, and substitutions could be made, and still the result would come within the scope of the invention.

## Claims

1. A method of testing a multi-beam antenna and associated electronics used for transmitting and receiving data, said method comprising:
transmitting a spread spectrum test signal from a signal source to the antenna;
receiving the transmitted spread spectrum test signal with the antenna;
processing the received spread spectrum test signal;
activating the electronics to transmit a return signal via the antenna;
receiving the transmitted return signal at a signal receiver; and
processing the received return signal to determine the quality of operation of the antenna and electronics.

2. A method as claimed in claim 1, wherein the spread spectrum test signal is transmitted while the antenna is transmitting or receiving another signal.

3. A method as claimed in claims 1-2, wherein processing the received spread spectrum test signal comprises despreading the spread spectrum signal to obtain a narrow band signal.

4. A method as claimed in claims 1-3, wherein processing the received return signal comprises comparing the received return signal with a reference.

5. A method as claimed in claims 1-4, wherein processing the received return signal comprises comparing the received return signal bandwidth with the spread spectrum test signal bandwidth.

6. A method as claimed in claims 1-5, wherein:
transmitting the spread spectrum test signal and receiving the transmitted return signal comprise transmitting the spread spectrum test signal from and receiving the transmitted return signal at a ground station; and
receiving the transmitted spread spectrum test signal and transmitting the return signal comprise receiving the transmitted spread spectrum test signal on and transmitting the return signal from an orbiting satellite.

7. A system for testing a multi-beam antenna and associated electronics used for transmitting and receiving data, said system comprising:
an antenna;
a test signal source for transmitting a spread spectrum test signal to said antenna;
a first signal receiver coupled to said antenna for receiving the transmitted spread spectrum test signal;
a first signal processor for processing the received spread spectrum test signal;
a transmitter responsive to the processed test signal, for transmitting a return signal;
a second signal receiver for receiving the transmitted return signal; and
a second signal processor for processing the received return signal.

8. A system as claimed in claim 7, wherein said first signal processor comprises a circuit to provide a narrow bandwidth signal.

9. A system as claimed in claims 7-8, wherein said second signal processor comprises a comparer to compare the received return test signal with a reference.

10. A system as claimed in claims 7-9, wherein said second signal processor comprises a comparer to compare the received return test signal bandwidth with the spread spectrum test signal bandwidth.

11. A system as claimed in claims 7-10, wherein:
said antenna, said first signal receiver, said first signal processor, and said transmitter are on an orbiting satellite; and
said test signal source, said second signal receiver, and said second signal processor are at a ground station.

12. A method of testing a multi-beam antenna and associated electronics used for transmitting and receiving data, said method comprising:
creating a spread spectrum test signal;
activating the electronics to transmit the spread spectrum test signal via the antenna;
receiving the transmitted test signal; and
processing the received test signal to determine the quality of operation of the antenna and electronics.

13. A method as claimed in claim 12, wherein the spread spectrum test signal is transmitted while the antenna is receiving or transmitting another signal.

14. A method as claimed in claims 12 and13, wherein processing the received return signal comprises comparing the received return signal with a reference.

15. A method as claimed in claims 12-14, wherein processing the received return signal comprises comparing the received return signal bandwidth with the spread spectrum test signal bandwidth.

16. A method as claimed in claims 12-15, wherein transmitting the spread spectrum signal comprises:
transmitting the spread spectrum test signal from an orbiting satellite; and
receiving the transmitted test signal comprises receiving the transmitted test signal at a ground station.

17. A system for testing a multi-beam antenna and associated electronics used for transmitting and receiving data, said system comprising:
a transmitter and an antenna for transmitting a spread spectrum test signal;
a signal receiver for receiving the transmitted test signal; and
a signal processor for processing the received test signal.

18. A system as claimed in claim 17, wherein said signal processor comprises a comparer to compare the received test signal with a reference.

19. A system as claimed in claims 17-18, wherein said signal processor comprises a comparer to compare the received test signal bandwidth with the spread spectrum test signal bandwidth.

20. A system as claimed in claims 17-19, wherein:
said transmitter and said antenna are on an orbiting satellite; and
said signal receiver and said signal processor as at a ground station.

21. A method of communicating between an orbiting communication satellite, having a beamforming antenna with a known available frequency spectrum, and a plurality of locations distributed over a geographic area of the earth, said method comprising:
assigning to each location a frequency channel from the available frequency spectrum, with adjacent locations being assigned different frequency channels;
directing a beam between the beamforming antenna and each location, the beam for each location being within the assigned frequency channel of the respective location and having a specified beam width; and transmitting data on the assigned frequency channels.

22. A method as claimed in claim 21, wherein the beamforming antenna is a phased array antenna having a plurality of elements, and the frequency channels are assigned by selecting an amplitude value and a phase shift for each of the elements.

23. A method as claimed in claims 21-22, further comprising reassigning the frequency channels from time to time as needs of the locations change.

24. A method as claimed in claims 21-23, wherein:
transmitting data comprises transmitting data from the orbiting communication satellite; and
said method further comprises receiving the transmitted data at the plurality of locations.

25. A method as claimed in claims 21-24, wherein:
transmitting data comprises transmitting data from the plurality of locations; and
said method further comprises receiving the transmitted data at the orbiting communication satellite.

26. A method of receiving radio frequency signals, said method comprising:
transmitting a radio frequency signal having a first polarization from a signal source to a signal receiver;
receiving the radio frequency signal having the first polarization at the signal receiver;
processing the received radio frequency signal having the first polarization to provide a first processed signal;
determining whether the quality of the first processed signal is acceptable;
if the quality of the first processed signal is acceptable, utilizing the first processed signal;
if the quality of the first processed signal is not acceptable, notifying the signal source;
transmitting the radio frequency signal from the signal source to the signal receiver with a second polarization;
receiving the radio frequency signal having the second polarization at the signal receiver;
processing the received radio frequency signal having the second polarization to provide a second processed signal; and
utilizing the second processed signal.

27. A method as claimed in claim 26, wherein receiving the radio frequency signal includes determining the polarization of the received radio frequency signal, and if the received radio frequency signal has the first polarization, applying the received radio frequency signal to a first amplifier, but if the received radio frequency signal has the second polarization, applying the received radio frequency signal to a second amplifier.

28. A method as claimed in claims 26-27, wherein determining the quality of the first processed signal comprises detecting the presence of the first processed signal.

29. A method as claimed in claims 21-28, wherein transmitting the radio frequency signal comprises transmitting the radio frequency signal from a ground station; and receiving the radio frequency signal comprises receiving the radio frequency signal on an orbiting communication satellite.

30. A system for receiving radio frequency signals, said system comprising:
a signal source for transmitting a radio frequency signal with predetermined polarization;
a signal receiver for receiving radio frequency signals and determining the polarization of the received radio frequency signals;
a first amplifier connected to said signal receiver for amplifying received radio frequency signals having a first polarization;
a second amplifier connected to said signal polarization detector for amplifying received radio frequency signals having a second polarization;
a signal processor connected to said first and second amplifiers for determining the quality of the amplified radio frequency signals;
a utilizing circuit for utilizing amplified radio frequency signals determined to be of at least a first level of quality; and
a transmitter responsive to amplified radio frequency signals determined to be of less than the first level of quality, for transmitting a message to said signal source to cause said signal source to retransmit the radio frequency signal with the second polarization.

31. A system as claimed in claim 30, wherein said signal receiver comprises an orthogonal mode transducer.

32. A system as claimed in claims 30-31, wherein said signal source is a ground station; and said signal receiver, said first and second amplifiers, said signal processor, said utilizing circuit, and said transmitter are in an orbiting satellite.

33. A method of receiving a radio frequency signal, said method comprising:
transmitting a data signal having a first polarization from a signal source;
receiving the data signal having the first polarization;
processing the received data signal having the first polarization to provide a first processed data signal;
determining whether the quality of the first processed data signal is acceptable;
if the quality of the first processed data signal is acceptable, utilizing the first processed data signal;
if the quality of the first processed data signal is not acceptable, notifying the signal source, transmitting the data signal from the signal source with a second polarization, receiving the data signal having the second polarization at the satellite, processing the received data signal having the second polarization to provide a second processed data signal, and utilizing the second processed data signal;
during transmission of one of the data signal having the first polarization and the data signal having the second polarization, sending a spread spectrum test signal from the signal source;
receiving the spread spectrum test signal with an antenna;
processing the spread spectrum test signal;
transmitting a return test signal;
receiving the return test signal at the signal source; and
comparing the received return test signal with a reference to determine the quality of the antenna operation.

34. A method as claimed in claim 33, wherein the data signal is transmitted from a ground station and all the other steps are performed on an orbiting satellite.

35. A method of communicating between an orbiting communication satellite having a beamforming antenna with a known available frequency spectrum, and a plurality of locations distributed over a geographic area of the earth, said method comprising:
assigning to each location a frequency channel from the available frequency spectrum, with adjacent locations being assigned different frequency channels;
directing a beam between the beamforming antenna and each location, the beam for each location being within the assigned frequency channel of the respective location and having a specified beam width;
transmitting data on the assigned frequency channels;
during transmission of the data signal, sending a spread spectrum test signal from the signal source to the satellite;
receiving the spread spectrum test signal with the beamforming antenna;
processing the spread spectrum test signal at the satellite;
transmitting a return test signal from the satellite;
receiving the return test signal at the signal source; and
comparing the received return test signal with a reference to determine the quality of the antenna operation.

36. A method as claimed in claim 35, wherein:
transmitting data comprises transmitting data from the orbiting communication satellite; and
said method further comprises receiving the transmitted data at the plurality of locations.

37. A method as claimed in claims 35-36, wherein:
transmitting data comprises transmitting data from the plurality of locations; and
said method further comprises receiving the transmitted data at the communication satellite.
